# EUROPEAN PATENT APPLICATION

(11) **EP 1 308 858 A2**
(43) Date of publication of application: **07.05.2003**
(21) Application number: 02257564.1
(22) Date of filing: 31.10.2002
(51) Int. Cl.: G06F 17/30, H04M 11/06, H04Q 7/32

(54) **Provisioning of a mobile station over a wireless network**

(30) Priority: 31.10.2001 US 999656
(71) Applicant: Openwave Systems Inc., Redwood City, CA 94063 (US)
(72) Inventor: Luna, Michael E. S., Carnation, WA 98014 (US); Chen, David A., San Carlos, CA 94070 (US); Dusse, Stephen R., Woodside, CA 94062 (US)
(74) Representative: Bartle, Robin Jonathan (GB)

(57) **Abstract**

A method and apparatus for provisioning a mobile station over a wireless network are described. The mobile station contains a browser to allow navigation of hypermedia content. The browser sends a request for provisioning content to a remote provisioning server via the wireless network. The request includes a network resource locator. In response, the provisioning server sends a markup language document via a wireless network to the mobile station, containing a reference to provisioning content. The browser retrieves the provisioning content based on the reference and stores the provisioning content in the mobile station. The provisioning content is used in the mobile station to enhance a capability of the mobile station.

## Description

This is a continuation-in-part of: U.S. Patent application no. 09/289,559, filed on April 9, 1999, of S. Dusse et al., entitled, "Method and System for Web Based Provisioning of Two-Way Mobile Communications Devices;" and U.S. Patent application no. 09/904,010, filed on July 11, 2001, of B. Martin Jr. et al., entitled, "Method and Apparatus for Distributing Authorization to Provision Mobile Devices on a Wireless Network;" both of which are hereby incorporated herein by reference in their entirety.

### FIELD OF THE INVENTION

The present invention relates to two-way mobile communication and computing devices and, more particularly, to a method and apparatus for provisioning features and services of such devices over a wireless network.

### BACKGROUND OF THE INVENTION

Wireless service providers would like to have the ability to provision mobile stations that operate on their networks. A mobile station may be, for example, a cellular telephone. "Provisioning" can be defined as storing in a mobile station data that configures the mobile station to provide or make use of a new feature or service, without upgrading or altering the software in the mobile station. Thus, "provisioning" is to be contrasted with upgrading software. For example, a wireless carrier may provision, into a cellular telephone that operates on its network, information such as network addresses (e.g., the home page for an Internet-enabled cellular telephone), user preferences (e.g., bookmarked Uniform Resource Locators (URLs)), and privileges (e.g., email account ID and password). It is desirable to be able to provision additional types of features and services in a mobile station over the air, to enhance and improve the experience of the user of the mobile station.

### SUMMARY OF THE INVENTION

The present invention includes a method and apparatus for provisioning a mobile station designed to operate on a wireless network. In the method, provisioning content is received at the mobile station from a remote server via the wireless network. The provisioning content is stored in the mobile station and used in the mobile station to enhance a capability of the mobile station.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 illustrates a network environment in which the present invention may be practiced;
Figure 2 shows a high-level abstraction of a mobile station and a provisioning server;
Figure 3 is a flow diagram illustrating a network-initiated process for provisioning a mobile station over a wireless network; and
Figure 4 is a flow diagram illustrating a user-initiated process for provisioning a mobile station over a wireless network.

### DETAILED DESCRIPTION

A method and apparatus for provisioning a mobile station over a wireless network are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. For example, a feature, structure, act, etc. described in one embodiment may also be included in other embodiments. Thus, the present invention can include a variety of combinations and/or integrations of the embodiments described herein.

U.S. Patent application no. 09/289,559 of S. Dusse, which is incorporated herein by reference, and which is assigned to the assignee of the present invention, describes techniques for provisioning a mobile station over a wireless network. The technique described below is an extension to, and improvement of, those techniques.

As described in greater detail below, a mobile station, such as a cellular telephone, contains a browser which allows navigation of hypermedia content by the user of the mobile station. The browser sends a request for provisioning content, including a network resource locator, to a remote provisioning server via the wireless network. In response, the provisioning server sends a markup language document to the mobile station via the wireless network, containing a reference to provisioning content. The browser retrieves the provisioning content based on the reference and stores the provisioning content in the mobile station. The provisioning content is used in the mobile station to enhance a capability of the mobile station.

For example, the mobile station may include a display device through which it generates a graphical user interface (GUI), and the provisioning content may be used to enhance the GUI. In particular, the provisioning content may include features such as wallpapers (background displays), screensavers, fonts, menu structures, language strings (e.g., to configure the mobile station to interact with the user in a particular language), and Java "MIDlets" (applets conforming to the Mobile Information Device profile). The provisioning content is not limited to GUI features, however. For example, in a mobile telephone, provisioning content can include ring tone data for enabling the mobile telephone to generate various different ring tones in response to incoming telephone calls. Also in a mobile telephone telephone, provisioning content may include voice service parameters, such as a mobile identification number (MIN), preferred roaming list (PRL), and authentication keys. It will be recognized that many other types of content can be provisioned in a mobile device using the techniques described herein.

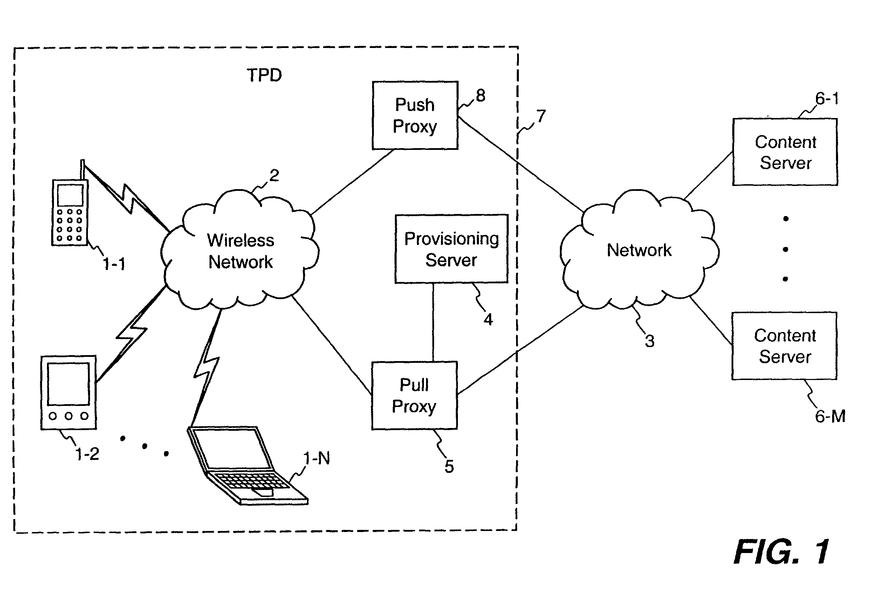

Refer now to Figure 1, which illustrates a network environment in which the present invention can be practiced. As shown, a number (N) of mobile stations 1-1 through 1-N operate on a wireless network 2. The mobile stations 1 may include any of various types of devices, such as cellular telephones, personal digital assistants (PDAs), notebook (laptop) computers, two-way pagers, and the like. In the illustrated embodiment, the wireless network 2 is coupled through a pull proxy 5 and a push proxy 8 to another network (or internetwork), i.e., network 3. Coupled to network 3 are a number (M) of content servers 6-1 through 6-M. Network 3 may be, for example, the Internet, a corporate intranet, a wide area network (WAN), a local area network (LAN), or a combination thereof.

Coupled to the pull proxy 4 is a provisioning server 4. The provisioning server 4 may be a conventional server-class computer system. An example of such a provisioning server is one which executes the Openwave Provisioning Manager (OPM), available from Openwave Systems Inc. of Redwood City, California. Software on a mobile station 1 may include a browser (sometimes called a "microbrowser" or "minibrowser"), such as the UP.Browser of Openwave Systems. In conjunction with the UP.Browser, the OPM has the ability to provision a mobile station, such as a cellular telephone, remotely over the air via a wireless network.

The pull proxy 5 and push proxy 8 each use conventional techniques to enable communication between mobile stations 1 on wireless network 2 and devices on network 3. For example, if network 3 is the Internet, the pull proxy 5 and push proxy 8 may include a gateway to convert and/or translate between the languages and protocols used by devices on the Internet (e.g., hypertext markup language (HTML) and hypertext transport protocol (HTTP)) and the languages and protocols used by the mobile stations 1 (e.g., wireless markup language (WML) and wireless access protocol (WAP)). An example of a device which performs these operations is the Mobile Access Gateway, available from Openwave Systems.

The pull proxy 5 is used to enable the user of a mobile station 1 to locate and request provisioning content or other content from a content server 6. The push proxy 8 is used during network-initiated provisioning (as opposed to user-initiated provisioning) to "push" provisioning content from content servers 6 to mobile stations 1.

Provisioning server 4, pull proxy 5, and push proxy 8 each may be owned and/or operated by the wireless carrier (i.e., the wireless service provider), although that is not necessarily the case. The provisioning server 4, pull proxy 5, and push proxy can all be implemented in the same physical computer system, although that also is not necessarily the case. Hence, these elements may be implemented in one or more conventional server-class computers.

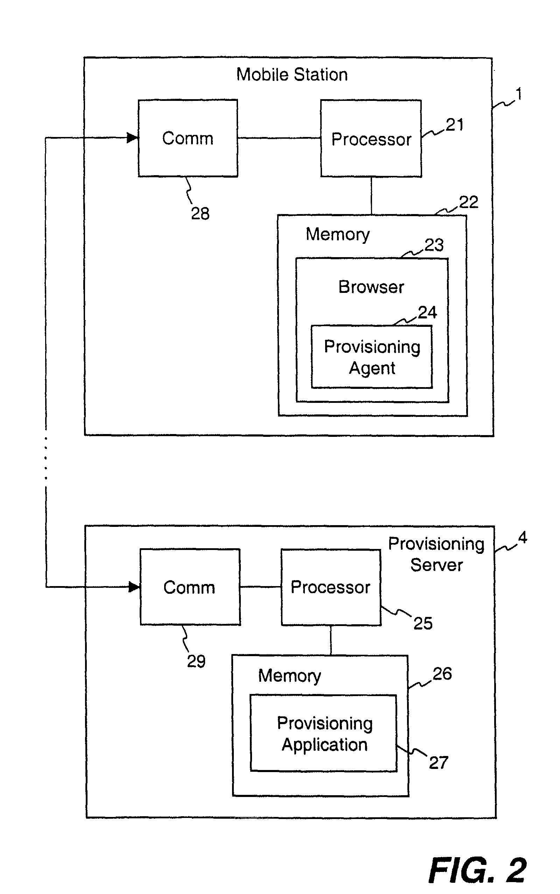

Figure 2 shows an abstraction of a mobile station 1 and the provisioning server 4, according to one embodiment. The mobile station 1 includes a processor 21, as well as a memory 22 and a data communication device 28 coupled to processor 21. The provisioning server 4 includes a processor 25 as well as a memory 26 and a data communication device 29 coupled to processor 25. Of course, both the mobile station 1 and the provisioning server 4 may also include other components that are not shown, such as input/output (I/O) devices, additional storage devices, buses and/or adapters, etc. The details of such other components are not necessary for understanding the present invention and are well-known to those skilled in the art. Each of the processors 21 and 25 may be, or may include, one or more general- or special-purpose programmable microprocessors, digital signal processors (DSPs), application specific integrated circuits (ASICs), programmable logic devices (PLDs), or the like, or a combination of such devices. Each of memories 23 and 26 may be, for may include, random access memory (RAM), flash or read-only memory (ROM) (which may be programmable), one or more mass storage devices (e.g., magnetic disk, CD-ROM, DVD), or the like, or a combination of such devices. Each of the data communication devices 28 and 29 may be, or may include, a wireless transceiver (particularly device 28 in mobile station 1), a conventional or broadband modem, an Ethernet adapter, or the like.

The memory 26 of the provisioning server 4 includes application software (a "provisioning application") 27 executable by the processor 25 to provision the mobile station 1. The provisioning application 27 communicates provisioning messages, objects, and parameters to the mobile station 1, as described further below. The memory 22 of the mobile station 1 stores a browser 23, which includes a provisioning agent 24. Except as otherwise described herein, browser 23 is a conventional browser for a mobile station, such as the Openwave UP.Browser. The provisioning agent 24 is a component of the browser 23 which manages the provisioning transaction protocol, decomposes provisioning content, and performs requested provisioning operations in the mobile station 1. In other embodiments, the provisioning agent 24 may be separate from the browser 23, but may nonetheless be stored in memory 22.

In the illustrated embodiment, the provisioning agent 24 is given control by the browser 23 whenever the browser 23 receives a predetermined type of document referred to as a Mobile Management Command (MMC) document. An MMC document is an extensible markup language (XML) document that contains commands specifying the name and contents of items to be provisioned ("MMC objects") in the mobile device 1 or the name of mobile device parameters to be read. The provisioning of content in a mobile station 1 is accomplished by writing one or more MMC objects into memory in the mobile station 1.

Whenever the browser 23 in a mobile station 1 retrieves a document from an origin server, the browser 23 determines whether the document is an MMC document. An MMC document normally contains one or more MMC objects. The browser 23 automatically recognizes an MMC document as such based on a document type identifier in the header of the document. Note that in other embodiments, however, a provisioning message can be recognized by a mobile station 1 using other techniques, particularly if provisioning is handled in the mobile station 1 by an entity other than the browser 23. For example, a mobile station 1 might consider any messages that are on a predetermined network port to be provisioning messages.

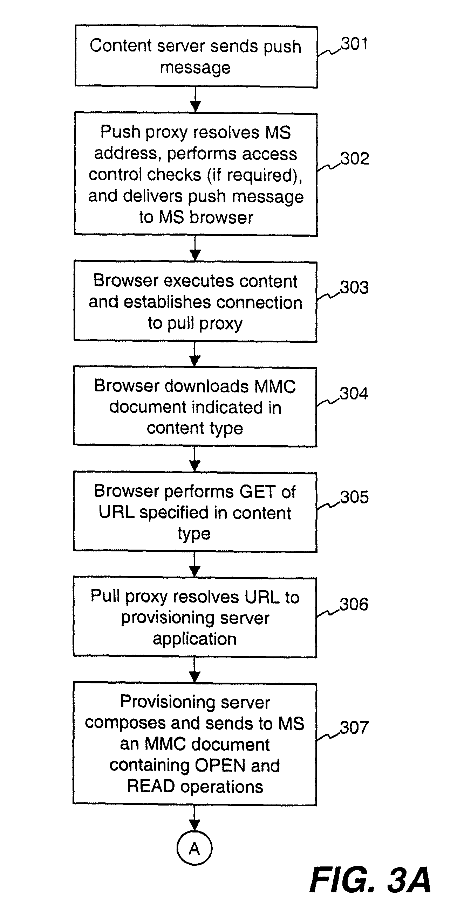

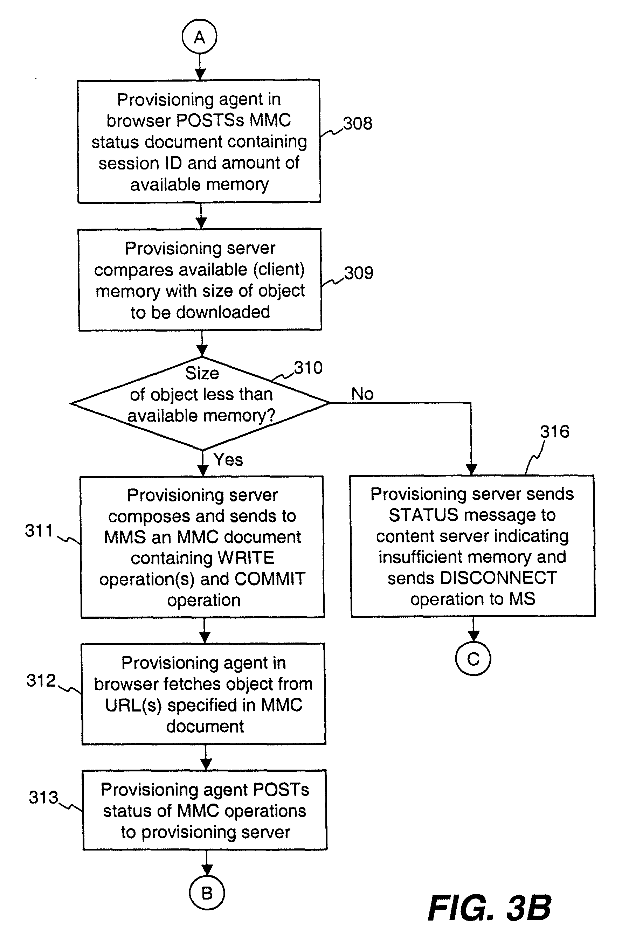

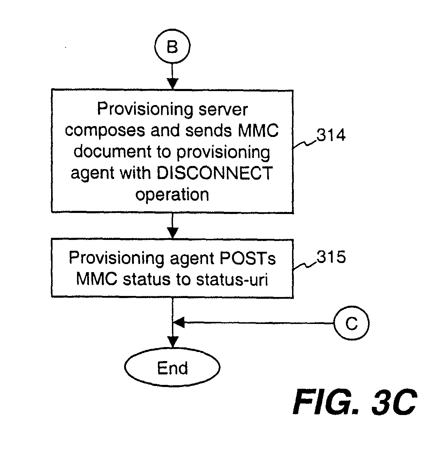

Provisioning of the mobile station 1 may be either user-initiated or network-initiated. Figures 3A through 3C collectively illustrate a process by which network-initiated provisioning may be performed. Network-initiated provisioning can be made to completely automatic and transparent to the user of the mobile station.

Initially, at block 301 a content server 6 pushes a message to a mobile station 1 to initiate provisioning. This may be done using, for example, any of: short message service (SMS); WAP Push (e.g., a Service Load (SL)) over HTTP, wireless session protocol (WSP), or SMS; or HTTP where the mobile station includes an HTTP listener function. In one embodiment, the push message is sent to the mobile station 1 via the push proxy 8. In such an embodiment, at block 302 the push proxy 8 resolves the address of the targeted mobile station (MS) 1, performs any required access control checks, and delivers the Push message to the browser 23 of the targeted mobile station 1. At block 303 the browser 23 executes the content of the received Push message and establishes a connection (e.g., by transmission control protocol (TCP)) to the pull proxy 5. At block 304 the browser 23 then downloads an MMC document indicated by a URL in the content type of the received Push message. At block 305 the browser generates a GET request (e.g., by WSP) specifying the URL. The pull proxy 5 receives the GET request and resolves the URL to the provisioning application 27 on the provisioning server 4 at block 306. At block 307 the provisioning server 4 composes and sends to the mobile station 1 an MMC document containing OPEN and READ operations. At block 308 the provisioning agent 24 causes the browser 23 to POST to the provisioning server 4 an MMC status document containing a session ID and the amount of available memory in the mobile station 1. At block 309 provisioning server 4 compares the indicated available memory indicated with the amount of memory required by the provisioning object(s) to be downloaded. If the memory required by the object(s) is smaller than the amount of available memory in the mobile station (block 310), the process proceeds from block 311, as described below.

If there is insufficient memory, however, the routine ends with block 316, in which the provisioning application 27 sends a STATUS message to the initiating content server 6, indicating insufficient memory, and then sends a DISCONNECT operation to the mobile station 1.

If sufficient memory is available in the mobile station 1, then at block 311 the provisioning server 4 composes and sends to the mobile station 1 an MMC document containing a URL reference to the object (or objects) to be provisioned, one or more WRITE operations, and a COMMIT operation. The object(s) to be provisioned may include any of the examples of provisioning content mentioned above, such as wallpaper, screensavers, language strings, ring tone data, etc. At block 312 the provisioning agent 24 in the mobile device 1 fetches the object(s) to be provisioned from the URL specified in the MMC document and stores them in memory in the mobile device 1. The provisioning agent 24 then causes the mobile device 1 to execute any re-initialization or other similar process to enable it to begin using the provisioned object(s). The provisioning agent 24 then POSTs the status of the MMC operations to the provisioning server 4 at block 313. At block 314 the provisioning server 4 composes and sends an MMC document to the provisioning agent 24 with a DISCONNECT operation, to terminate the connection. The process then ends with block 315, in which the provisioning agent 24 posts completion status to a STATUS URI, upon which a billing event can be triggered and/or a next hypermedia page can be returned to the browser 23 for display.

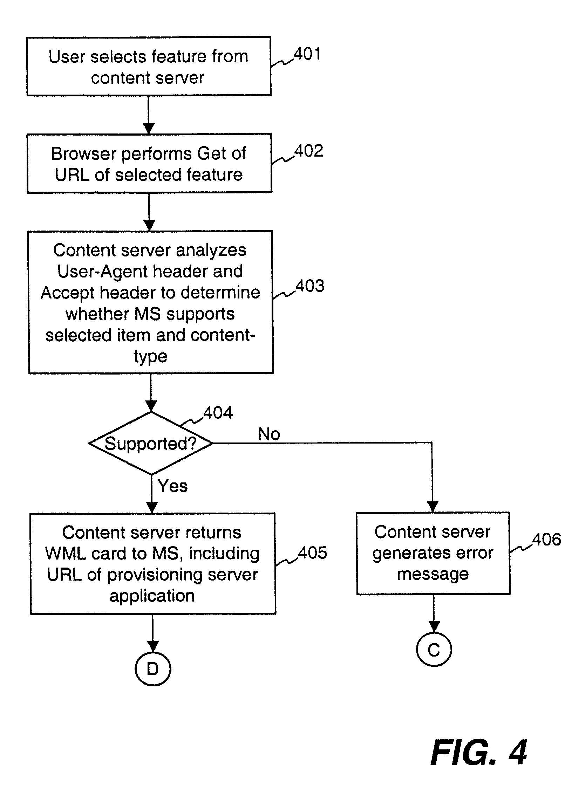

Figure 4 illustrates a process by which user-initiated provisioning may be performed. The user-initiated process is similar to the network-initiated process described above, except that provisioning is triggered by a URL embedded in the content returned from a content server 6 as the user is selecting an item on the content server. Initially, at block 401 the user selects an item from the content server 6. The item may be any of the examples of provisioning content mentioned above, or any other provisioning content, and may be indicated on a web page downloaded from the content server 6 by the browser 23. At block 402 the browser 23 performs a WML GET request of the URL of the selected item. The content server 610 then analyzes the User-Agent header and the Accept header in the GET request at block 403, to determine whether the mobile station 1 supports the selected item and content-type. If the item and content-type are supported (block 404), the content server 6 returns a WML card to the mobile station 1, including a URL of the provisioning application 27 in the provisioning server 4. The process then continues in a manner essentially identical to the portion of the above-described network-initiated process starting with block 305. If either the item or the content-type is not supported, then at block 406 the content server 6 sends an appropriate error message to the browser 23, and the process ends.

The following code shows an example of the format of an MMC document that may be sent to a mobile station 1 to provision it. Note that methods other than sending an MMC document may be used to communicate provisioning information to a mobile station, such as HTTP headers, WSP headers, or other XML applications. In this example, email account information is being provisioned in the mobile station:

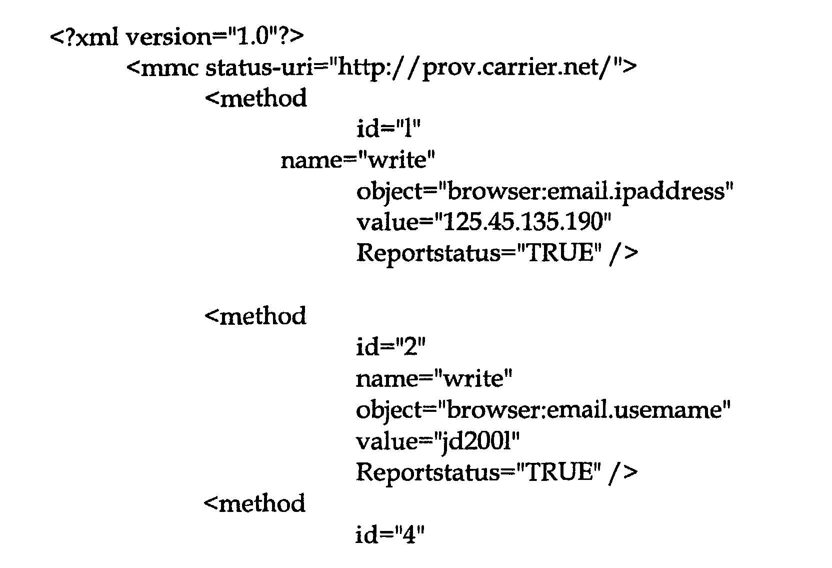

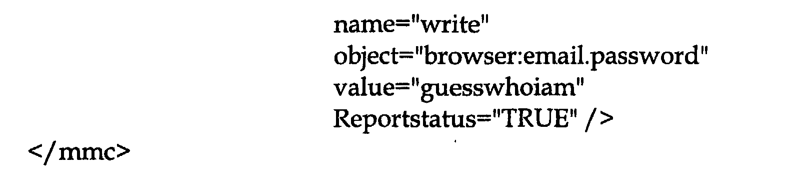

In response to a provisioning request from the provisioning server 4, a mobile device 1 returns a status MMC document indicating the result of the provisioning request. For the above example, such a document might appear as follows:

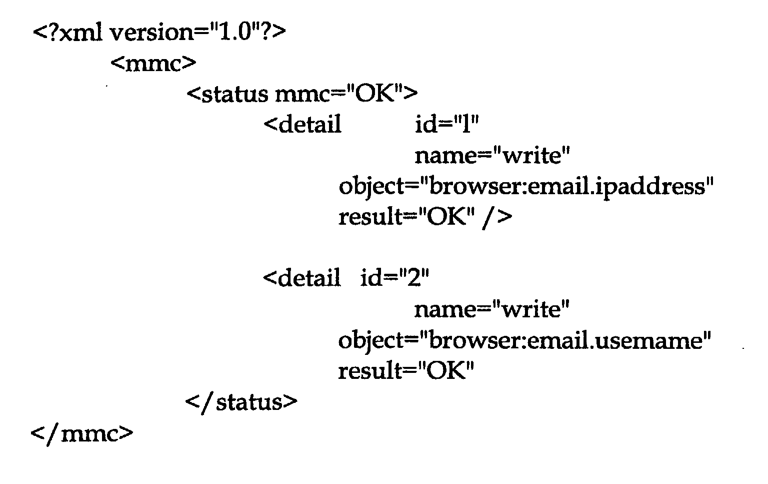

A billing system may be used to enable the wireless services provider or the provider of the provisioning content to charge the user of the mobile device for a provisioning transaction. The billing system may be a component of the provisioning server 4 or a separate system on wireless network 2 or on network 3. When an item has been provisioned on a mobile device 1, the billing system receives information indicating completion of the provisioning transaction, including the date and time of the provisioning transaction, information identifying the provisioned content and information identifying the mobile device and/or its subscriber. The information may be provided to the billing system via the wireless network 2. If the billing system is separate from provisioning server 4, the information may be provided to the billing system by the provisioning server 4. The billing system logs the information and, at designated times (e.g., monthly), uses it to generate billing information for use in sending a request for payment to the subscriber.

Thus, a method and apparatus for provisioning a mobile station over a wireless network have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method of provisioning a mobile station designed to operate on a wireless network, the method comprising:
receiving provisioning content at the mobile station from a remote server via the wireless network;
storing the provisioning content in the mobile station; and
using the provisioning content in the mobile station to enhance a capability of the mobile station.

2. A method as recited in claim 1, wherein the mobile station is configured to generate a graphical user interface (GUI), and wherein the provisioning content represents a feature of the GUI.

3. A method as recited in claim 2, wherein the provisioning content represents a screen saver for display on a display device of the mobile station.

4. A method as recited in claim 2, wherein the provisioning content represents a wallpaper for display on a display device of the mobile station.

5. A method as recited in claim 2, wherein the provisioning content represents a font for displaying text to a user.

6. A method as recited in claim 2, wherein the provisioning content represents a menu structure for a menu of the GUI.

7. A method as recited in claim 2, wherein the provisioning content represents a set of character strings in a specified language, to configure the mobile station to interact with a user in the specified language.

8. A method as recited in claim 1, wherein the provisioning content comprises a Java MIDlet.

9. A method as recited in claim 1, wherein the provisioning content comprises ring tone data for use by the mobile station in generating a ring tone signaling an incoming call to a user.

10. A method as recited in claim 1, wherein the provisioning content is contained within an XML document.

11. A method as recited in claim 1, wherein said receiving provisioning content at the mobile station is in response to a request for the provisioning content input by a user at the mobile station.

12. A method as recited in claim 1, wherein said receiving provisioning content at the mobile station is not in response to any request for provisioning content by a user of the mobile station.

13. A method as recited in claim 12, wherein the provisioning content is received as part of a download process initiated by a remote server.

14. A method as recited in claim 12, wherein the provisioning content is received as part of a download process initiated by the mobile station.

15. A method as recited in claim 1, wherein the mobile station comprises a browser for navigating hypermedia content, and wherein the provisioning content is for use in enhancing a capability of the browser.

16. A method of operating a browser in a mobile station designed to operate on a wireless network, the browser for navigating hypermedia content, the method comprising:
sending a request for provisioning content to a remote server via the wireless network, the request including a network resource locator;
receiving a markup language document via the wireless network in response to the request, the markup language document containing a reference to provisioning content for provisioning the mobile station;
retrieving the provisioning content based on the reference; and
storing the provisioning content in the mobile station, the provisioning content for use to enhance a capability of the mobile station.

17. A method as recited in claim 16, wherein the mobile station is configured to generate a graphical user interface (GUI), and wherein the provisioning content is for use in generating a feature of the GUI.

18. A method as recited in claim 17, wherein the provisioning content represents a screen saver for display on a display device of the mobile station.

19. A method as recited in claim 17, wherein the provisioning content represents a wallpaper for display on a display device of the mobile station.

20. A method as recited in claim 17, wherein the provisioning content represents a font for displaying text to a user.

21. A method as recited in claim 17, wherein the provisioning content represents a menu structure for a menu of the GUI.

22. A method as recited in claim 17, wherein the provisioning content represents a set of character strings in a specified language, to configure the GUI to interact with a user in the specified language.

23. A method as recited in claim 16, wherein the provisioning content comprises a Java MIDlet.

24. A method as recited in claim 16, wherein the provisioning content comprises ring tone data for use by the mobile station in generating a ring tone signaling an incoming call to a user.

25. A method as recited in claim 16, wherein said sending a request for provisioning content is in response to a user input applied at the mobile station.

26. A method as recited in claim 16, wherein said sending a request for provisioning content is not in response to any request for provisioning content by a user of the mobile station.

27. A method as recited in claim 26, wherein the provisioning content is received as part of a download process initiated by a remote server.

28. A method as recited in claim 26, wherein the provisioning content is received as part of a download process initiated by the browser.

29. A method as recited in claim 16, wherein the remote server is coupled to a wireline network in addition to the wireless network.

30. A method of provisioning a mobile station operating on a wireless network, the method comprising:
receiving, at a server system, a provisioning request from the mobile station via the wireless network; and
sending a markup language document from the server system to the mobile station via the wireless network in response to the provisioning request, the markup language document containing a reference to provisioning content for provisioning the mobile station, for use by the mobile station to download the provisioning content, the provisioning content for use in the mobile station to enhance a capability of the mobile station.

31. A method as recited in claim 30, wherein the mobile station is configured to generate a graphical user interface (GUI), and wherein the provisioning content is for use in generating a feature of the GUI.

32. A method as recited in claim 31, wherein the provisioning content represents a screen saver for display on a display device of the mobile station.

33. A method as recited in claim 31, wherein the provisioning content represents a wallpaper for display on a display device of the mobile station.

34. A method as recited in claim 31, wherein the provisioning content represents a font for displaying text to a user.

35. A method as recited in claim 31, wherein the provisioning content represents a menu structure for a menu of the GUI.

36. A method as recited in claim 31, wherein the provisioning content represents a set of character strings in a specified language, to configure the GUI to interact with a user in the specified language.

37. A method as recited in claim 30, wherein the provisioning content comprises a Java MIDlet.

38. A method as recited in claim 30, wherein the provisioning content comprises ring tone data for use by the mobile station in generating a ring tone signaling an incoming call to a user.

39. A method as recited in claim 30, wherein the server system is coupled to a wireline network in addition to the wireless network.

40. A method comprising:
receiving, at a billing system, information that a provisioning transaction has occurred between a mobile station and another processing system, the mobile station associated with a subscriber of wireless services;
logging the information in the billing system; and
using the logged information to generate billing information for use in requesting payment in relation to the provisioning transaction.

41. A method comprising:
receiving, at a billing system coupled to a wireline network, information indicating that an item has been provisioned in a mobile station via a wireless network by a provisioning server on the wireline network, the billing system receiving the information via the wireline network;
logging the information in the billing system; and
using the logged information to generate billing information for use in billing a subscriber associated with the mobile station for provisioning content or services.
